# EUROPÄISCHE PATENTSCHRIFT

(11) **EP 1 430 370 B1**
(45) Veröffentlichungstag und Bekanntmachung des Hinweises auf die Patenterteilung: **31.08.2005**
(21) Anmeldenummer: 02772054.9
(22) Anmeldetag: 12.09.2002
(51) Int. Cl.: G05B 19/05

(54) **SYSTEM UND VERFAHREN ZUR PROGRAMMIERUNG EINES AUTOMATISIERUNGSSYSTEMS BASIEREND AUF IMPULSDIAGRAMMEN**
SYSTEM AND METHOD FOR PROGRAMMING AN AUTOMATION SYSTEM, BASED ON PULSE TIMING DIAGRAMS
SYSTEME ET PROCEDE POUR PROGRAMMER UN SYSTEME D'AUTOMATISATION A PARTIR DE DIAGRAMMES D'IMPULSIONS

(30) Priorität: 25.09.2001 DE 10147166
(43) Veröffentlichungstag der Anmeldung: 23.06.2004
(73) Patentinhaber: SIEMENS AKTIENGESELLSCHAFT, 80333 München (DE)
(72) Erfinder: EICHHORN, Annette, 91093 Hessdorf (DE); HOFFMANN, Werner, 91074 Herzogenaurach (DE); KIELBURGER, Helmut, 91054 Erlangen (DE)
(86) Internationale Anmeldenummer: PCT/DE2002/003407
(87) Internationale Veröffentlichungsnummer: WO 2003/027782

(56) Entgegenhaltungen:
- US-A- 4 736 340
- US-A- 5 321 603

## Beschreibung

Die Erfindung betrifft System und Verfahren zur Programmierung eines Automatisierungssystems basierend auf Impulsdiagrammen.

Ein derartiges System und Verfahren kommt im Bereich der Automatisierungstechnik, insbesondere der Fertigungs- und Prozessautomatisierung zum Einsatz. Dabei werden häufig Impulsdiagramme, die auch als pneumatische Ablaufpläne bzw. als Weg-Zeit-Diagramme bezeichnet werden, von der "Konstruktion" zur Beschreibung von Maschinenbewegungen erstellt. Die Impulsdiagramme kennzeichnen somit einen gewünschten Verlauf von Maschinenbewegungen. Bezüglich der Programmierung von speicherprogrammierbaren Steuerungen (SPS) eines Automatisierungssystem bedeutet dies, dass mit Hilfe der Impulsdiagramme ein fehlerfreier Automatikbetrieb beschrieben wird, ohne dass Betriebsarten oder Fehlerbehandlungen Berücksichtigung finden. Bei heutigen Automatisierungslösungen werden die Impulsdiagramme in der Regel von einen Konstrukteur erstellt. Ein Automatisierer, der für die Erstellung von SPS-Programmen beispielsweise in der SPS-Programmiersprache AWL verantwortlich ist, werden die Impulsdiagramme dann per Hand aus der grafischen Beschreibung in Programme für die speicherprogrammierbaren Steuerungen umgesetzt.

Aus US 5,321,603 ist eine Programmiervorrichtung für eine industrielle Steuerung bekannt, die es ermöglicht, über einen Compiler graphische Informationen in ein Steuerungsprogramm umzuwandeln.

Der Erfindung liegt die Aufgabe zugrunde, ein System bzw. Verfahren zur Programmierung eines Automatisierungssystems anzugeben, das unter Berücksichtigung einer konsistenten Datenhaltung auch eine Inbetriebsetzung und Überwachung des Automatisierungssystems ermöglicht.

Diese Aufgabe wird durch ein System sowie durch ein Verfahren mit den in den Ansprüchen 1 bzw. 6 angegebenen Merkmalen gelöst.

Der Erfindung liegt die Erkenntnis zugrunde, Impulsdiagramme, die beispielsweise von einem Konstrukteur erstellt werden, auch für eine Programmierung des Automatisierungssystems, insbesondere für eine Programmierung von speicherprogrammierbaren Steuerungen (wieder) zu verwenden. Eine derartige (Wieder-) Verwendung wird dadurch sichergestellt, dass innerhalb eines intelligenten Werkzeugs, welches sowohl die Generierung der Impulsdiagramme als auch eine Generierung von Erweiterungen ermöglicht, eine datentechnische Basis geschaffen wird, die dann ohne großen Aufwand in ein vom Automatisierungssystem" insbesondere von einer speicherprogrammierbaren Steuerung verarbeitbare Daten umgesetzt werden kann. Insgesamt ergibt sich somit eine konsistente Datenhaltung, da Anderungen/Korrekturen in den Impulsdiagrammen durch die Einbindung in ein einheitliches Werkzeug auch direkt Änderungen bzw. Anpassungen in den Erweiterungen und daraus abgeleitet in einer anschließend erfolgten Codegenerierung für die Programme des Automatisierungssystems ermöglicht wird. Die unterschiedlichen Anwendergruppen wie Konstrukteure, Automatisierer und Inbetriebsetzer arbeiten dabei innerhalb eines einheitlichen Werkzeugs auf jeweils denselben Daten, wodurch Umsetzungsfehler vermieden werden.

Ein besonders vorteilhafter Anwendungsfall ergibt sich dadurch, dass das Datenprogramm zur Programmierung mindestens einer speicherprogrammierbaren Steuerung des Automatisierungssystems vorgesehen ist. Hierdurch kommt es zu einer Generierung eines SPS-Programmes aus der graphischen Beschreibung der Impulsdiagramme, ergänzt durch SPS-spezifische Erweiterungen wie Betriebsarten, Fehlerbehandlung etc. insbesondere durch einen Automatisierer.

Eine für den Anwender einfache und ergonomische Erstellung der Impulsdiagramme und ihrer Erweiterungen wird dadurch sichergestellt, dass die Vorrichtung einen intelligenten Editor zur Erstellung der graphischen Impulsdiagramme und der Erweiterungen in der Weise aufweist, dass die Erweiterungen über einen Lupeneditor erfolgen, über den mit den Daten der Impulsdiagramme koppelbare Zusatzinformationen generierbar sind.

Eine Wiederverwertung der für Planung, Konstruktion und Inbetriebsetzung erstellten Impulsdiagramme sowie der zugehörigen Erweiterungen auch für Bobachtung und Diagnose erfolgt in der Weise, dass die Daten der Impulsdiagramme mit einem Bedien- und Beobachtungssystem koppelbar sind.

Eine direkte Auswertung der Impulsdiagramme und/oder der Erweiterungen innerhalb eines Bedien- und Beobachtungssystems kann in der Weise erfolgen, dass das Bedien- und Beobachtungssystem zur Darstellung der erzeugten graphischen Impulsdiagramme im Vergleich zu aktuellen Betriebsdaten vorgesehen ist.

Eine einfache und aufwandsarme Diagnose kann dadurch erzielt werden, dass das System zur Überlagerung der erzeugten graphischen Impulsdiagramme zu den aktuellen Betriebdaten in der Weise vorgesehen ist, dass bei einer Ermittlung eines Fehlers eine Visualisierung des Fehlers in den Impulsdiagrammen und den dargestellten aktuellen Betriebdaten erfolgt.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Automatisierungssystems mit mittels Impulsdiagrammen programmierten speicherprogrammierbaren Steuerungen,
- FIG 2: eine schematische Darstellung für den Verfahrensablauf für die Erzeugung von Impulsdiagrammen mit Erweiterungen,
- FIG 3: eine schematische Darstellung für die Datengenerierung der Impulsdiagramme mit Erweiterungen sowie der beteiligten Anwender,
- FIG 4: ein schematisches Beispiel eines über Impulsdiagramme zu steuernden Automatisierungssystems in Form einer Modellanlage,
- FIG 5: eine schematische Darstellung beispielhafter Impulsdiagramme der in Fig. 4 gezeigten Modellanlage,
- FIG 6: eine schematische Darstellung beispielhafter Impulsdiagramme der in Fig. 4 gezeigten Modellanlage mit Erweiterungen zur Programmierung einer speicherprogrammierbaren Steuerung,
- FIG 7: eine schematische Darstellung beispielhafter Impulsdiagramme der in Fig. 4 gezeigten Modellanlage mit beispielhaften Erläuterungen zur Generierung eines Datenprogramms aus den Impulsdiagrammen zur Programmierung einer speicherprogrammierbaren Steuerung,
- FIG 8, 9: eine schematische Darstellung von Impulsdiagrammen für eine Online-Beobachtung eines Automatisierungssystems.

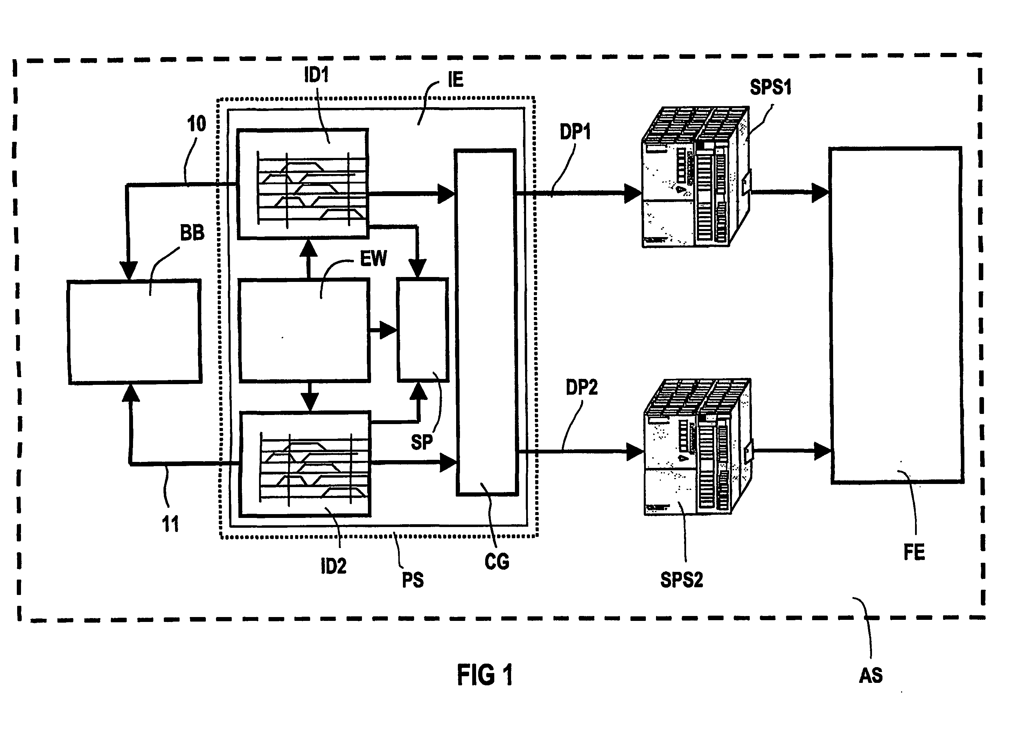

FIG 1 zeigt ein Blockschaltbild eines Ausführungsbeispiel eines Automatisierungssystems AS. Das Automatisierungssystem AS besteht aus einen Bedien- und Beobachtungssystem BB, aus speicherprogrammierbaren Steuerungen SPS1, SPS2 sowie einer Fertigungseinrichtung FE. Die Ansteuerung der speicherprogrammierbaren Steuerungen SPS1, SPS2 erfolgt über Datenprogramme DP1, DP2, die mittels eines Programmiersystems PS erstellt werden. Das Programmiersystem PS umfasst einen Codegenerator CG, der einen für die speicherprogrammierbaren Steuerungen verarbeitbaren Code erzeugt. Die Datenprogramme DP1, DP2 basieren auf Impulsdiagrammen ID1, ID2 sowie Erweiterungen EW, die mittels eines intelligenten Editors IE erzeugt werden. Der intelligente Editor IE umfasst weiter einen Speicher SP zur Speicherung der Daten der Impulsdiagramme ID 1, ID2 sowie der Erweiterungen EW.

Im Folgenden wird der prinzipielle Ablauf der Programmierung des in FIG 1 gezeigten Automatisierungssystems AS näher beschrieben. Kernstück für die Erstellung der Datenprogramme DP1, DP2 der speicherprogrammierbaren Steuerungen SPS1, SPS2 ist dabei der intelligente Editor IE. Mit Hilfe des intelligenten Editors IE werden beispielsweise von einen Konstrukteur in gewohnter Weise Impulsdiagramme ID1, ID2, deren Layout beispielsweise entsprechend der VDI-Richtlinie 3230 erstellt wird, entworfen. In einen zweiten Schritt werden die so entstandenen Impulsdiagramme ID1, ID2 beispielsweise von einem Automatisierer ebenfalls in dem intelligenten Editor IE mit Erweiterungen EW versehen. Hierzu werden beispielsweise über Lupen auf die einzelnen Zustände bzw. Signale der Impulsdiagramme ID1, ID2 entsprechender Erweiterungen EW in die Impulsdiagramme ID1, ID2 eingearbeitet. Hierdurch besteht ein direkter Bezug zwischen den Impulsdiagrammen ID1, ID2 und den Erweiterungen EW. Die Generierung der SPS-Programme DP1, DP2 erfolgt dann aus der graphischen Beschreibung der Impulsdiagramme ID1, ID2, erweitert um die entsprechenden SPS-spezifischen Erweiterungen, wie Betriebsarten, Fehlerbehandlung, usw.. Die Generierung der Datenprogramme DP1, DP2 für die speicherprogrammierbaren Steuerungen SPS1, SPS2 erfolgt mit Hilfe des Code-Generators CG. Mit Hilfe des intelligenten Editors IE wird somit sichergestellt, dass sämtliche Arbeiten im Zusammenhang mit der Entstehung der Datenprogramme DP1, DP2 mit Hilfe eines einheitlichen Werkzeugs erfolgen und sämtliche erforderlichen Daten innerhalb eines Tools (in Form des intelligenten Editors) IE enthalten sind. Hierdurch werden Umsetzungsfehler vermieden, eine Datenkonsistenz wird gewährleistet. Mit Hilfe der Datenprogramme DP1, DP2 erfolgt dann die Inbetriebsetzung der Fertigungseinrichtung FE, welche von den speicherprogrammierbaren Steuerungen SPS1, SPS2 gesteuert wird. Mit Hilfe der Verbindungen 10, 11 von den Impulsdiagrammen ID1, ID2 zum Bedien- und Beobachtungssystems BB wird in FIG 1 weiter angedeutet, dass die in den Impulsdiagrammen IDI, ID2 beschriebenen Abläufe ebenfalls zur Beobachtung und Diagnose im Bedien- und Beobachtungssystem BB genutzt werden können.

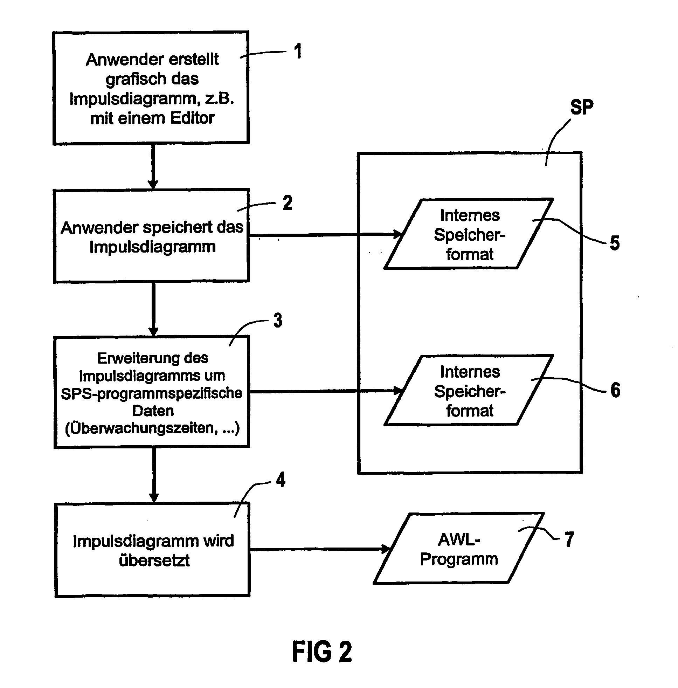

FIG 2 zeigt eine schematische Darstellung für den Verfahrensablauf für die Erzeugung von Impulsdiagrammen mit Erweiterungen. Im Schritt 1 des in FIG 2 dargestellten Programmablaufs erstellt ein Anwender graphisch entsprechende Impulsdiagramme mit dem intelligenten Editor (vergleiche FIG 1). Im Schritt 2 speichert der Anwender das mit dem Editor erstellte Impulsdiagramm. Die Abspeicherung erfolgt in einem ersten internen Speicherformat 5 im Speicher SP. Im Schritt 3 erfolgt eine Erweiterung des Impulsdiagramms um SPS-programmspezifische Daten wie Betriebsarten, Fehlerbehandlung, Überwachungszeiten, etc.. Auch diese Erweiterungen werden in einem zweiten internen Speicherformat 6 ebenfalls im Speicher SP abgespeichert. In einem Schritt 4 wird das Impulsdiagramm einschließlich der Erweiterungen in einem Programmcode übersetzt, beispielsweise in den sogenannten AWL-Programmcode, so dass schließlich das AWL-Programm 7 somit als für eine speicherprogrammierbare Steuerung verwertbares Programm vorliegt.

Der große Vorteil des in FIG 2 beschriebenen Verfahrens besteht darin, dass die Daten der Impulsdiagramme sowie die Erweiterungen innerhalb eines einheitlichen Tools entsprechend bearbeitet und in einen gemeinsamen Speicher SP abgespeichert werden. Hierdurch kommt es zu einer durchgängigen Bearbeitung der von einen Konstrukteur beispielsweise im Schritt 2 erstellten Impulsdiagramme sowie der von einem Automatisierer im Schritt 3 ergänzten Erweiterungen. Für eine Inbetriebsetzung einer Fertigungseinrichtung bzw. eines technischen Prozesses liegen die benötigten Daten des Automatisierungssystems somit in einen wiederverwertbaren Datenformat vor, so dass Umsetzungsfehler vermieden werden. Das beispielsweise in Form von AWL-Code vorliegende Programm 7 kann zudem auch für Beobachtungs- und Diagnosezwecke genutzt werden, ohne dass hierfür erneuter Programmieraufwand erforderlich ist.

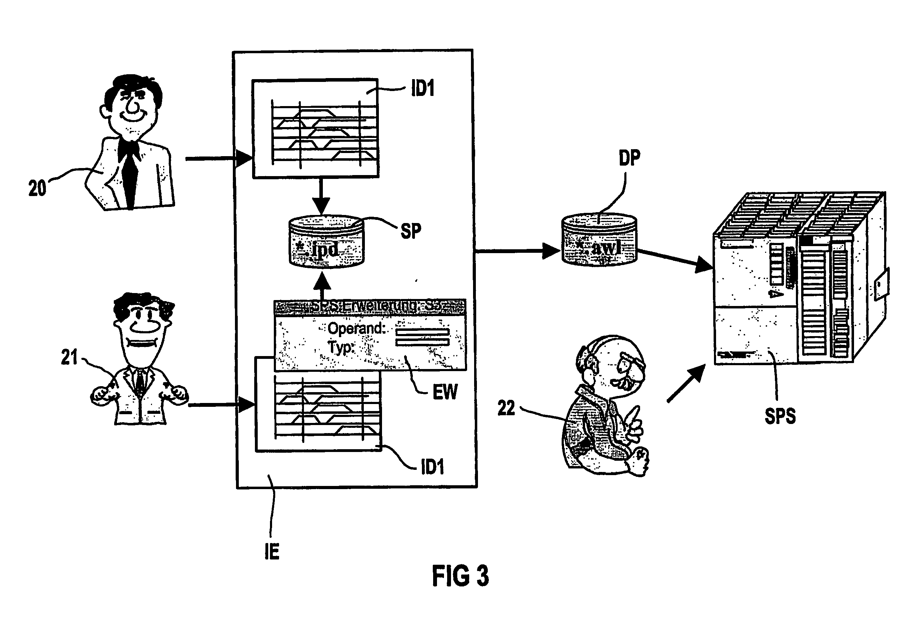

FIG 3 zeigt eine schematische Darstellung für die Erstellung der Impulsdiagramme ID1 mit Erweiterungen EW sowie der beteiligten Anwender in Form eines Konstrukteurs 20, eines Automatisierers 21 und eines Inbetriebsetzers 22. Dabei wird in Fig 3 veranschaulicht, dass der Konstrukteur die Aufgabe hat, in gewohnter Weise Impulsdiagramme zu erzeugen. Die Besonderheit liegt darin, dass die Generierung der Impulsdiagramme mittels des intelligenten Editors IE erfolgt. Dabei werden die Daten der Impulsdiagramme ID1 im Speicher SP in einem speziellen Datenformat im Ausführungsbeispiel mit der Extension "ipd" zur Kennzeichnung der Daten als Impulsdiagramme abgespeichert. Der Automatisierer 21 arbeitet ebenfalls mit denselben *.ipd-Daten, die im Speicher SP gespeichert sind und ergänzt im intelligenten Editor IE die Impulsdiagramme ID1 um Erweiterungen EW. Hierzu werden im Ausführungsbeispiel im Eingabefeld für die Erweiterungen EW Zusatzinformationen in entsprechende Datenfelder "Operand" und "Typ" eingetragen. Die so geänderten/ergänzten Daten werden vom Automatisierer 21 wiederum im Datenspeicher SP gesichert. Mit Hilfe des Codegenerators CG erfolgt anschließend innerhalb oder außerhalb des intelligenten Editors IE eine Umsetzung der *.ipd-Daten in ein Datenprogramm DP, welches im Ausführungsbeispiel ein Datenformat *.awl, d.h. ein AWL-Format aufweist. Dieses Datenprogramm DP wird vom Inbetriebsetzer 22 zur Inbetriebsetzung eines mit der speicherprogrammierbaren Steuerung gekoppelten Automatisierungssystems verwendet.

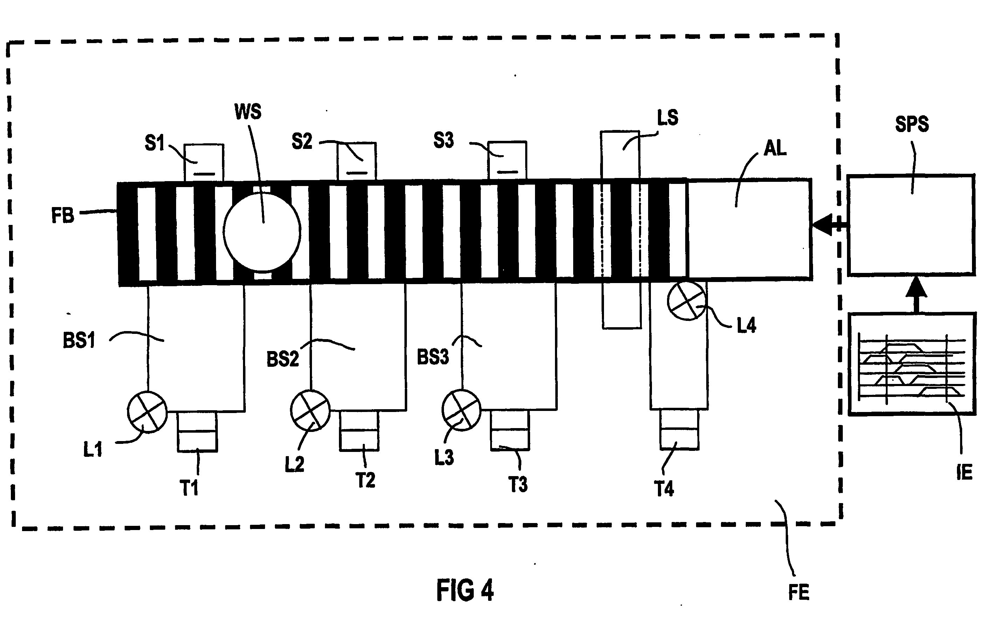

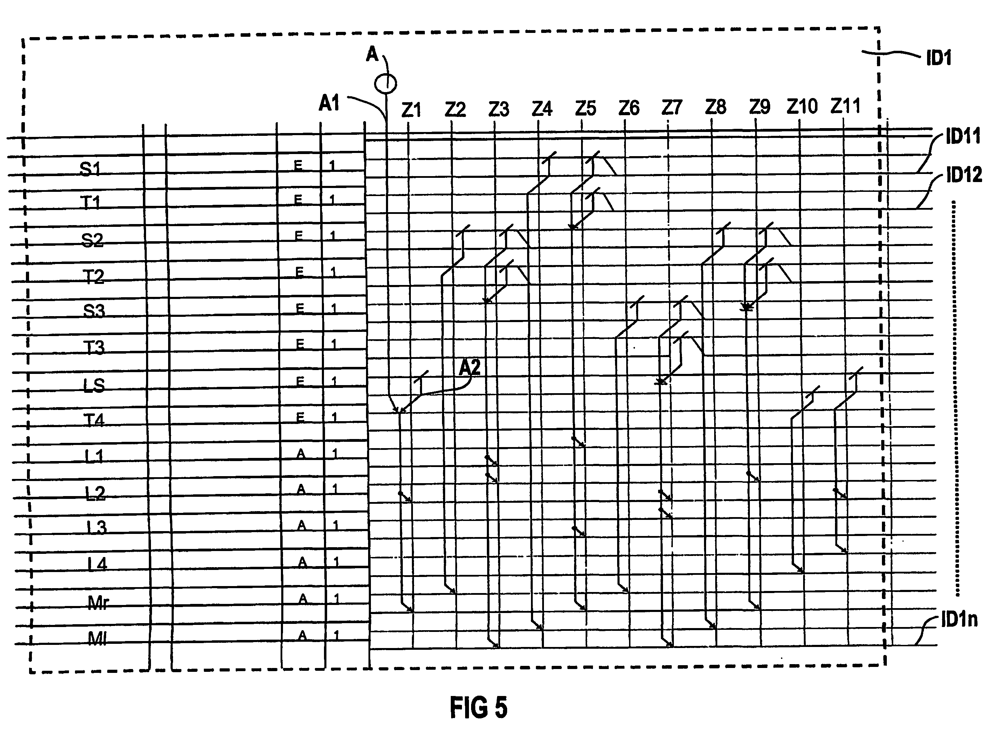

FIG 4 zeigt ein schematisches Beispiel eines über Impulsdiagramme zu steuernden Automatisierungssystems in Form einer Modellanlage. Die Modellanlage besteht aus einer Fertigungseinrichtung FE, die von einer speicherprogrammierbaren Steuerung SPS, die durch einen intelligenten Editor IE programmierbar ist. Die Fertigungseinrichtung FE umfasst ein Fließband FB, auf dem ein Werkstück WS beförderbar ist. Das Fließband FB dient dem Transport des Werkstücks WS von Bearbeitungsstationen BS1, BS2, BS3 zu einer Ablage AL. Die Steuerung des Transports des Werkstücks WL auf den Fließband FB erfolgt mit Hilfe von Sensoren S1, S2, S3 sowie mittels einer Lichtschranke LS. Im Bereich der Bearbeitungsstationen BS1, BS2, BS3 befindet sich jeweils eine Lampe L1, L2, L3 sowie ein Taster T1, T2, T3. Im Bereich der Ablage AL befindet sich eine weitere Lampe L4 sowie ein weiterer Taster T4. Die zeitliche Steuerung des Transports des Werkstücks WS von den Bearbeitungsstationen BS1..BS3 zur Ablage AL erfolgt, wie im Zusammenhang mit FIG 5 weiter erläutert wird, mittels Impulsdiagrammen sowie entsprechender Erweiterungen, die ebenfalls in dem intelligenten Editor IE abgespeichert sind.

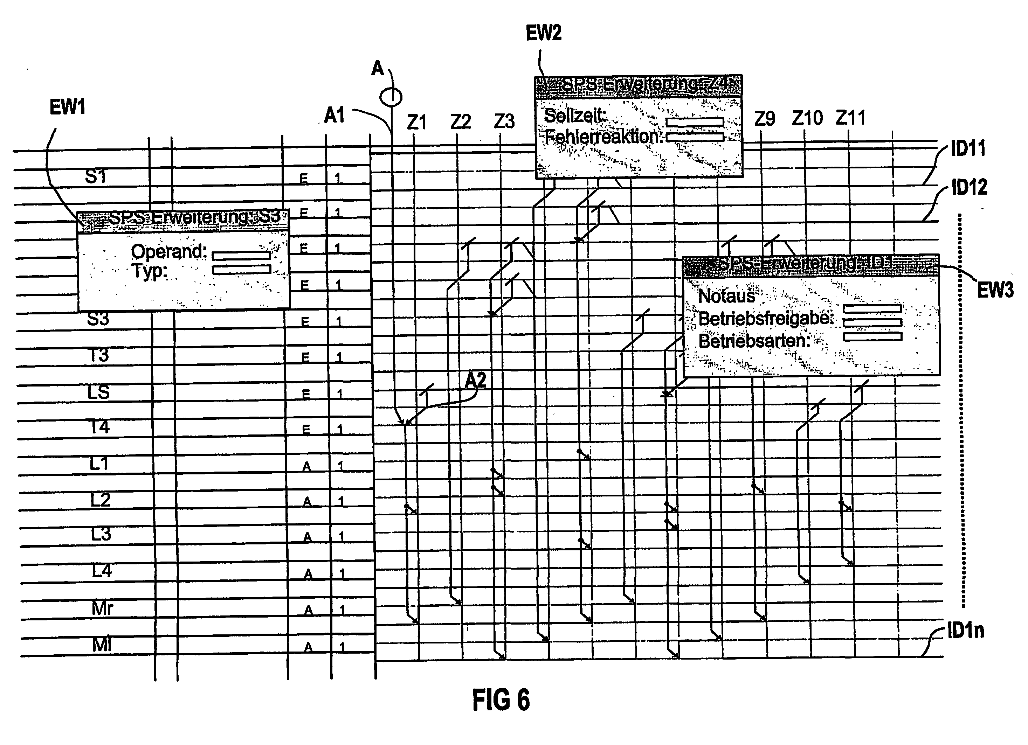

FIG 5 zeigt eine schematische Darstellung eines beispielhaften Impulsdiagramms ID1 zur Programmierung einer speicherprogrammierbaren Steuerung, die die in FIG 4 gezeigte beispielhafte Modellanlage ansteuern. Das Impulsdiagramm ID1 besteht aus einzelnen Impulsverläufen ID11..ID1n. Die Impulsdiagrammverläufe ID11..ID1n kennzeichnen jeweils gewünschte Schaltzustände Z1..Z11 der in FIG 4 gezeigten Sensoren S1, S2, S3, der Taster T1, T2, T3, T4, der Lampen L1..L4, der Lichtschranke LS sowie des Fließbandmotors, gekennzeichnet durch Impulsdiagramme für einen Motorrechtslauf Mr bzw. für einen Motorlinklauf Ml. Die Impulsdiagrammverläufe ID11, ID1n kennzeichnen dabei den jeweiligen Schaltzustand 0 bzw. 1 der entsprechenden Sensoren, Taster, Lampen etc., während mit Hilfe der im wesentlichen vertikal verlaufenden Ansteuerlinien A1..A2 die jeweiligen Ansteuerungen ab einem Startzeitpunkt A bezüglich des Sensor-/Aktorverhaltens gekennzeichnet wird. Das in FIG 4 dargestellte Impulsdiagramm wird, wie bereits im Zusammenhang mit FIG 1 und FIG 2 erläutert, beispielsweise von einem Konstrukteur erstellt. Die Besonderheit besteht nun darin, die Impulsdiagramme innerhalb des intelligenten Editors IE weiterzuverwenden und mit Erweiterungen zu versehen, wie im folgenden in FIG 6 noch weiter dargestellt und ausgeführt wird.

FIG 6 zeigt die bereits im Zusammenhang mit FIG 5 gezeigten Impulsdiagrammverläufe der in FIG 4 dargestellten Modellanlage. Zusätzlich enthält FIG 6 drei beispielhafte Datenfelder EW1, EW2, EW3, die der Eingabe von Erweiterungen für die Impulsdiagramme ID11..ID1n dienen. So enthält das erste Erweiterungsfeld EW1 Eingabemöglichkeiten für den Schalter S3 in Form der Datenfelder "Operand" und "Typ". Das zweite Erweiterungsdatenfeld EW2 dient zur Eingabe von Erweiterungen für einen Zustand 4 der Modellanlage, während das dritte Erweiterungsdatenfeld EW3 der Kennzeichnung von Erweiterungen für das Impulsdiagramm ID1 dient. Die Besonderheit der in FIG 5 exemplarisch dargestellten Datenfelder besteht darin, dass sowohl die Impulsdiagrammverläufe ID11..ID1n sowie die Erweiterungen EW1..EW3 innerhalb einer Datenbasis abgespeichert werden und die Ausgangsbasis für eine Umsetzung in ein für ein Automatisierungssystem lesbares Datenprogramm, beispielsweise in Form eines sogenannten AWL-Programms dienen.

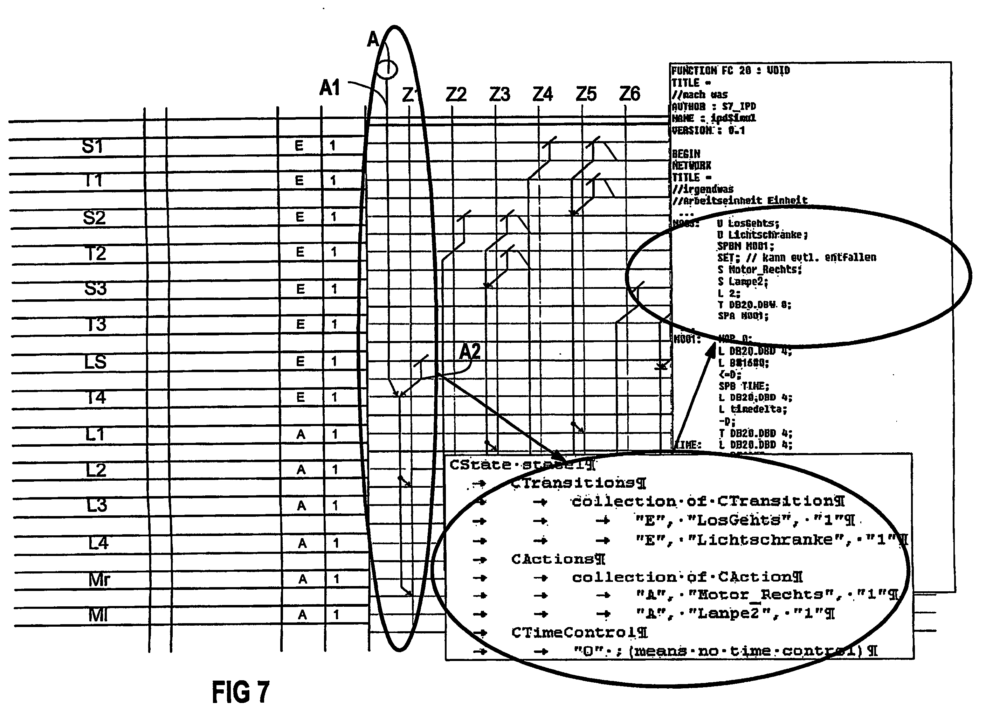

FIG 7 zeigt schematisch eine derartige Datenumsetzung, wie sie beispielsweise mit Hilfe des in FIG 1 gezeigten Codegenerators CG erfolgt. Hierzu erfolgt eine Umsetzung der jeweiligen Zustände der einzelnen Sensoren/Aktoren der Modellanlage in ein internes Speicherformat, beispielsweise eine bereits im Zusammenhang mit Fig. 3 beschriebenes "ipd"-Format, wie es im Fig. 7 im Ausschnittsfenster F2 für einen im Ausschnittsfenster F1 ausgeschnittenen Zustand dargestellt ist. Das interne Speicherformat beschreibt die jeweiligen Pegel der einzelnen Sensoren/Aktoren während der jeweiligen Zustände Z1..Z11. Mit Hilfe des Codegenerators (vergleiche FIG 1) erfolgt aus den Impulsdiagrammverläufen ID1..ID2 ergänzt mit den weiteren Erweiterungen EW1..EW3 (vergleiche FIG 6), d.h. aus sämtlichen Informationen des internen Speicherformats *.ipd entsprechend den im Fenster F2 beispielhaft dargestellten Daten die Generierung eines Datenprogramms, wie es beispielhaft im Fenster F3 gezeigt ist. Das im Fenster F3 gezeigte Datenprogramm dient der Steuerung der Modellanlage.

Insgesamt ergibt sich somit eine durchgängige Erweiterung der von der Konstruktion eingebrachten Daten in Form der Impulsdiagramme ID1..IDN unter Berücksichtigung der vom Automatisierer eingebrachten Ergänzungen in Form der Erweiterungen schrittweise bis zur Inbetriebsetzung einer Fertigungseinrichtung, beispielsweise der in FIG 4 dargestellten Modellanlage.

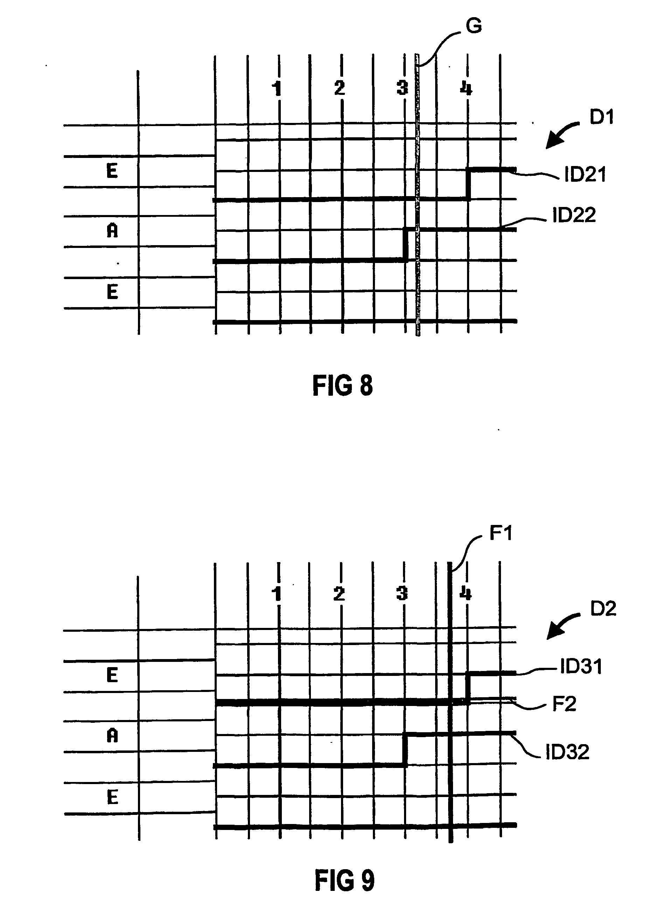

FIG 8, 9 zeigen eine schematische Darstellung von Impulsdiagrammen für eine Online-Beobachtung eines Automatisierungssystems. FIG 8 zeigt die Anwendung, Impulsdiagrammverläufe ID21, ID22 auch für Bedien- und Diagnosezwecke zu verwenden. Das Diagramm D1 in Fig. 8 zeigt dabei die Beobachtung eines aktuellen Zustands einer Anlage, wobei durch einen vertikalen Balken, der beispielsweise in grüner Farbe gehalten ist, der sogenannte Gutfall visualisiert wird, während im Diagramm D2 in Fig. 9 durch sich kreuzende vertikale Linien F1, F2 ein Fehlerfall in den Impulsdiagrammen ID31, ID 32 gekennzeichnet wird. Somit werden die einmal in den Impulsdiagrammen beschriebenen Abläufe und Erweiterungen von einer Applikation, beispielsweise einen Bedien- und Beobachtungssystem auch zur Diagnose wiederverwertet. Auf diese Weise kann der laufende Betrieb ohne zusätzliche Eingabe beobachtet werden. Die gemessenen aktuellen Daten werden als überlagertes Signal auf einen Monitor dargestellt, wobei im Fehlerfalle ein Farbumschlag, wie im Diagramm D2 dargestellt ist, erfolgen kann.

Zusammenfassend betrifft die Erfindung somit ein System und ein Verfahren zur Programmierung eines Automatisierungssystems AS. Zur Vermeidung von Umsetzungsfehlern sowie zur Gewährleistung konsistenter Daten bei der Programmierung eines Automatisierungssystems AS wird vorgeschlagen, zur Generierung eines Programms des Automatisierungssystems AS, insbesondere des Programms einer speicherprogrammierbaren Steuerung SPS1, SPS2 eine graphische Beschreibung durch Impulsdiagramme ID1, ID2 zu verwenden. Änderungen in den Impulsdiagrammen ID1, ID2 führen so direkt zu Änderungen des Programms der SPS, ohne dass eine erneute und fehlerbehaftete Umsetzung erforderlich ist.

## Patentansprüche

1. System (PS) zur Programmierung eines Automatisierungssystems (AS) mit einer Vorrichtung (ID) zur Erzeugung von graphischen Impulsdiagrammen (ID1, ID2) und von Erweiterungen (EW11..EW1n, EW 21..EW2m) für das Automatisierungssystem (AS) über Datenfelder, die einen direkten Bezug zu den Impulsdiagrammen (ID1, ID2) aufweisen, wobei die von der Vorrichtung (ID) erzeugten graphischen Impulsdiagramme in Kombination mit den Erweiterungen (EW11..EW1n, EW 21..EW2m) für das Automatisierungssystem (AS) zur Generierung eines Datenprogramms (DP) zum Betrieb des Automatisierungssystems (AS) vorgesehen ist, wobei das System einen intelligenten Editor (IE) zur Erstellung der graphischen Impulsdiagramme (ID1, ID2) und der Erweiterungen (EW11..EW1n, EW 21..EW2m) in der Weise aufweist, dass die Erweiterungen (EW11..EW1n, EW 21..EW2m) über einen Lupeneditor erfolgen, über den mit den Daten der Impulsdiagramme (ID1, ID2) koppelbare Zusatzinformationen generierbar sind.

2. System nach Anspruch 1,
**dadurch gekennzeichnet,**
**dass** das Datenprogramm (DP) zum Ablauf in mindestens einer speicherprogrammierbaren Steuerung (SPS1, SPS2) des Automatisierungssystems (AS)vorgesehen ist.

3. System nach einem der Ansprüche 1 oder 2,
**dadurch gekennzeichnet,**
**dass** die Daten der Impulsdiagramme (ID1, ID2) mit einem Bedien- und Beobachtungssystem koppelbar sind.

4. System nach einem der Ansprüche 1 bis 3,
**dadurch gekennzeichnet,**
**dass** das Bedien- und Beobachtungssystem zur Darstellung der erzeugten graphischen Impulsdiagramme im Vergleich zu aktuellen Betriebdaten vorgesehen ist.

5. System nach einem der Ansprüche 1 bis 4,
**dadurch gekennzeichnet,**
**dass** das System zur Überlagerung der erzeugten graphischen Impulsdiagramme zu den aktuellen Betriebdaten in der Weise vorgesehen ist, dass bei einer Ermittlung eines Fehlers eine Visualisierung des Fehlers in den Impulsdiagrammen (ID1, ID2) und den dargestellten aktuellen Betriebdaten erfolgt.

6. Verfahren zur Programmierung eines Automatisierungssystems (AS), bei dem graphischen Impulsdiagramme (ID1, ID2) und den Impulsdiagrammen zuordenbare Erweiterungen (EW11..EW1n, EW 21..EW2m) für das Automatisierungssystem (AS) über Datenfelder erzeugt werden, bei dem aus den erzeugten graphischen Impulsdiagrammen in Kombination mit den Erweiterungen (EW11..EW1n, EW 21..EW2m) für das Automatisierungssystem (AS) ein Datenprogramm (DP) zum Betrieb des Automatisierungssystems (AS) generiert wird, wobei die graphischen Impulsdiagramme (ID1, ID2) und die zugehörigen Erweiterungen (EW11..EW1n, EW 21..EW2m) mittels eines intelligenten Editors in der Weise erstellt werden, dass die Erweiterungen (EW11..EW1n, EW 21..EW2m) über einen Lupeneditor erfolgen, der mit den Daten der Impulsdiagramme (ID1, ID2) gekoppelte Zusatzinformationen enthält.

7. Verfahren nach Anspruch 6,
**dadurch gekennzeichnet,**
**dass** das Datenprogramms (DP) von mindestens einer speicherprogrammierbaren Steuerung (SPS1, SPS2) des Automatisierungssystems (AS) abgearbeitet wird.

8. Verfahren nach einem der Ansprüche 6 oder 7,
**dadurch gekennzeichnet,**
**dass** die Impulsdiagramme (ID1, ID2) in einem Bedien- und Beobachtungssystem (B&B) visualisiert werden.

9. Verfahren nach einem der Ansprüche 6 bis 8,
**dadurch gekennzeichnet,**
**dass** in dem Bedien- und Beobachtungssystem die erzeugten graphischen Impulsdiagramme im Vergleich zu aktuellen Betriebsdaten dargestellt werden.

10. Verfahren nach einem der Ansprüche 6 bis 9,
**dadurch gekennzeichnet,**
**dass** die erzeugten graphischen Impulsdiagramme zu den aktuellen Betriebdaten in der Weise überlagert werden, dass bei einer Ermittlung eines Fehlers eine Visualisierung des Fehlers in den Impulsdiagrammen (ID1, ID2) und den dargestellten aktuellen Betriebdaten erfolgt.

11. Computerprogrammprodukt mit Mitteln zur Durchführung eines Verfahrens nach einem der Ansprüche 6 bis 10, wenn das Computerprogramm auf einem elektronischem Schaltkreis oder einem Automatisierungssystem ausgeführt wird.

## Claims

1. System (PS) for programming an automation system (AS) with a device (ID) for generating graphical pulse timing diagrams (ID1, ID2) and expansions (EW11..EW1n, EW21..EW2m) for the automation system (AS) via data array having a direct reference to the pulse timing diagrams (ID1, ID2), wherein the graphical pulse timing diagrams generated by the device (ID), in combination with the expansions (EW11..EW1n, EW21..EW2m) for the automation system (AS), are provided for generating a data program (DP) for operating the automation system (AS), wherein the system has an intelligent editor (IE) for producing the graphical pulse timing diagrams (ID1, ID2) and the expansions (EW11..EW1n, EW21..EW2m) in such a way that the expansions (EW11..EW1n, EW21..EW2m) are made using a zoom-in editor via which additional information can be generated which can be linked to the data of the pulse timing diagrams (ID1, ID2).

2. System according to claim 1,
**characterised in that**
the data program (DP) is provided for running in at least one stored program control (SPS1, SPS2) of the automation system (AS).

3. System according to one of the claims 1 or 2,
**characterised in that**
the data of the pulse timing diagrams (ID1, ID2) can be linked to an operating and observation system.

4. System according to one of the claims 1 to 3,
**characterised in that**
the operating and observation system is provided for representing the generated graphical pulse timing diagrams in comparison with current operational data.

5. System according to one of the claims 1 to 4,
**characterised in that**
the system is provided for overlaying the generated graphical pulse timing diagrams relating to the current operational data in such a way that, if an error is detected, said error will be visualised in the pulse timing diagrams (ID1, ID2) and the represented current operational data.

6. Method for programming an automation system (AS), wherein graphical pulse timing diagrams (ID1, ID2) and expansions (EW11..EW1n, EW21..EW2m) which can be associated with said pulse timing diagrams are generated for the automation system (AS) via data array, wherein a data program (DP) for operating the automation system (AS) is generated from the generated graphical pulse timing diagrams in combination with the expansions (EW11..EW1n, EW21..EW2m) for the automation system (AS), wherein the graphical pulse timing diagrams (ID1, ID2) and the associated expansions (EW11..EW1n, EW21..EW2m) are produced by means of an intelligent editor in such a way that the expansions (EW11..EW1n, EW21..EW2m) are made via a zoom-in editor containing additional information linked to the data of the pulse timing diagrams (ID1, ID2).

7. Method according to claim 6,
**characterised in that**
the data program (DP) is processed by at least one stored program control (SPS1, SPS2) of the automation system (AS).

8. Method according to one of the claims 6 or 7,
**characterised in that**
the pulse timing diagrams (ID1, ID2) are visualised in an operating and observation system (B&B).

9. Method according to one of the claims 6 to 8,
**characterised in that**
the generated graphical pulse timing diagrams are represented in the operating and observation system in comparison with current operational data.

10. Method according to one of the claims 6 to 9,
**characterised in that**
the generated graphical pulse timing diagrams relating to the current operational data are overlaid in such a way that, if an error is detected, said error will be visualised in the pulse timing diagrams (ID1, ID2) and the represented current operational data.

11. Computer program product having means for performing a method according to one of the claims 6 to 10 when the computer program is executed on an electronic circuit or an automation system.

## Revendications

1. Système (PS) pour programmer un système d'automatisation (AS) avec un dispositif (ID) pour produire des diagrammes d'impulsions graphiques (ID1, ID2) et des extensions (EW11 .. EW1n, EW21 .. EW2m) pour le système d'automatisation (AS) par l'intermédiaire de champs de données qui comportent une référence directe aux diagrammes d'impulsions (ID1, ID2), les diagrammes d'impulsions graphiques produits par le dispositif (ID) étant prévus en combinaison avec les extensions (EW11 .. EW1n, EW21 .. EW2m) pour le système d'automatisation (AS) en vue de la génération d'un programme de données (DP) destiné à faire fonctionner le système d'automatisation (AS), le système comportant un éditeur intelligent (IE) pour élaborer les diagrammes d'impulsions graphiques (ID1, ID2) et les extensions (EW11 .. EW1n, EW21 .. EW2m) de telle sorte que les extensions (EW11 .. EW1n, EW21 .. EW2m) s'effectuent par l'intermédiaire d'un éditeur de macro par l'intermédiaire duquel peuvent être générées des informations supplémentaires pouvant être couplées aux données des diagrammes d'impulsions (ID1, ID2).

2. Système selon la revendication 1,
**caractérisé par le fait que** le programme de données (DP) est prévu pour une exécution dans au moins une commande par programme enregistré (SPS1, SPS2) du système d'automatisation (AS).

3. Système selon l'une des revendications 1 ou 2,
**caractérisé par le fait que** les données des diagrammes d'impulsions (ID1, ID2) peuvent être couplées à un système de commande et d'observation.

4. Système selon l'une des revendications 1 à 3,
**caractérisé par le fait que** le système de commande et d'observation est prévu pour représenter les diagrammes d'impulsions graphiques produits en comparaison avec des données de fonctionnement actuelles.

5. Système selon l'une des revendications 1 à 4,
**caractérisé par le fait que** le système est prévu pour superposer les diagrammes d'impulsions graphiques produits aux données de fonctionnement actuelles de telle sorte que, lors de la détermination d'une erreur, une visualisation de l'erreur s'effectue dans les diagrammes d'impulsions (ID1, ID2) et dans les données de fonctionnement actuelles représentées.

6. Procédé pour programmer un système d'automatisation (AS), dans lequel on produit des diagrammes d'impulsions graphiques (ID1, ID2) et des extensions (EW11 .. EW1n, EW21 .. EW2m) pouvant être associées aux diagrammes d'impulsions pour le système d'automatisation (AS) par l'intermédiaire de champs de données, dans lequel on génère à partir des diagrammes d'impulsions graphiques produits et en combinaison avec les extensions (EW11 .. EW1n, EW21 .. EW2m) pour le système d'automatisation (AS) un programme de données (DP) destiné à faire fonctionner le système d'automatisation (AS), les diagrammes d'impulsions graphiques (ID1, ID2) et les extensions associées (EW11 .. EW1n, EW21 .. EW2m) étant élaborés au moyen d'un éditeur intelligent de telle sorte que les extensions (EW11 .. EW1n, EW21 .. EW2m) s'effectuent par l'intermédiaire d'un éditeur de macro qui contient des informations supplémentaires couplées aux données des diagrammes d'impulsions (ID1, ID2).

7. Procédé selon la revendication 6,
**caractérisé par le fait que** le programme de données (DP) est exécuté par au moins une commande par programme enregistré (SPS1, SPS2) du système d'automatisation (AS).

8. Procédé selon l'une des revendications 6 ou 7,
**caractérisé par le fait que** les diagrammes d'impulsions (ID1, ID2) sont visualisés dans un système de commande et d'observation (B&B).

9. Procédé selon l'une des revendications 6 à 8,
**caractérisé par le fait que**, dans le système de commande et d'observation, les diagrammes d'impulsions graphiques sont représentés en comparaison avec des données de fonctionnement actuelles.

10. Procédé selon l'une des revendications 6 à 9,
**caractérisé par le fait qu'**on superpose les diagrammes d'impulsions graphiques produits aux données de fonctionnement actuelles de telle sorte que, lors de la détermination d'une erreur, on effectue une visualisation de l'erreur dans les diagrammes d'impulsions (ID1, ID2) et dans les données de fonctionnement actuelles représentées.

11. Programme informatique comprenant des moyens pour la mise en oeuvre d'un procédé selon l'une des revendications 6 à 10 lorsque le programme informatique est exécuté sur un circuit électronique ou sur un système d'automatisation.
